Europäisches Patentamt

**European Patent Office**

**Office européen des brevets**

(19)

(11) Veröffentlichungsnummer: **0 268 855 B1**

(12) **EUROPÄISCHE PATENTSCHRIFT**

(45) Veröffentlichungstag der Patentschrift: **03.04.91**

(51) Int. Cl.⁵: **F03D 3/06**

(21) Anmeldenummer: **87115739.2**

(22) Anmeldetag: **27.10.87**

(54) **Windrad.**

(30) Priorität: **29.10.86 DE 3636781**

(43) Veröffentlichungstag der Anmeldung:
**01.06.88 Patentblatt 88/22**

(45) Bekanntmachung des Hinweises auf die
Patenterteilung:
**03.04.91 Patentblatt 91/14**

(84) Benannte Vertragsstaaten:
**BE ES FR GB IT NL SE**

(56) Entgegenhaltungen:
**DE-A- 2 718 608**    **DE-A- 3 202 884**
**DE-A- 3 434 050**    **DE-C- 739 482**
**FR-A- 699 682**    **FR-A- 2 392 249**
**FR-A- 2 465 897**

(73) Patentinhaber: **Schönell, Jürgen**
**Meisenweg 1**
**W-4178 Kevelaer 3(DE)**

(72) Erfinder: **Schönell, Jürgen**
**Meisenweg 1**
**W-4178 Kevelaer 3(DE)**

(74) Vertreter: **Funken, Josef, Dipl.-Ing.**
**Hochstrasse 3e**
**W-4133 Neukirchen-Vluyn(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Trommelförmiges Windrad mit einem koaxial zur Drehache des Windrades angeordneten Zylinderrohr mit je einer kreisförmigen Endscheibe an beiden Enden des Zylinderrohres, wobei Flügel mit einem gekrümmt stromlinienförmigen Profil vorgesehen sind, die in Randnähe der beiden Endscheiben auf parallel zur Drehachse des Windrades angeordneten Schwenkachsen begrenzt schwenkbeweglich gelagert sind.

Aus der DE-OS 27 18 608 ist eine Windkraftmaschine bekannt, die einen Zylinder, zwei Endscheiben an beiden Enden des Zylinders und mehrere zylindersegmentförmige Flächen aufweist. Diese Segmentflächen bzw. Flügel sind in Randnähe der Endscheiben auf zur Drehachse der Windkraftmaschine parallel angeordneten Schwenkachsen gelagert. Dabei sind die Segmentflächen jede für sich um eine zur Drehachse der Windkraftmaschine parallele Schwenkachse, die unsymmetrisch zur Flächenmitte liegt, beweglich, und zwar so, daß der breitere Teil der Segmentfläche um einen einstellbar begrenzten Winkel bis 90° frei nach außen schwenkbar ist. Im ausgeschwenkten Zustand ragt der größere Teil der Flächenbreite aus der Kontur der Windkraftmaschine heraus, während der schmalere Teil hineinragt. Wenn eine horizontale Windströmung auf die vertikal stehende Windkraftmaschine trifft, so schwenkt diejenige Segmentfläche, deren Schwenkachse in Windrichtung gesehen hinten liegt, aus der Zylinderkontur der Windkraftmaschine gegen den Wind aus. Der auf diese Fläche wirkende Staudruck dreht das ganze Zylindersystem, wodurch die nächste Segmentfläche in die Strömung einläuft und ausschwenkt. Auf der der Ausschwenkposition gegenüberliegenden Seite des Systems streift die Strömung die Segmentflächen so, daß die Schwenkachse vorn liegt.

Diese bekannte Windkraftmaschine dreht sich in Richtung der Schwänze der Segmentflächen. Das hat zur Folge, daß diese Segmentflächen wie Schaufeln wirken und somit die gesamte Windkraftmaschine die Wirkung eines Schaufelrades hat. Darauf folgt des weiteren, daß die höchste Drehgeschwindigkeit dieser bekannten Windkraftmaschine der Windgeschwindigkeit entspricht. Die Drehgeschwindigkeit und somit auch der Wirkungsgrad sind stark abhängig von der gerade vorliegenden Windgeschwindigkeit.

Bei dem aus dem DE-GM 82 28 078 bekannten Vertikalachsenrotor mit zwischen zwei sich quer zur Rotorachse erstreckenden Scheiben und zwischen den Scheiben angeordneten achsparallelen Rotorflügeln sind die Rotorflügel jeweils um eine zur Rotorachse parallele Schwingachse freidrehend gelagert. Ferner ist für jeden Rotorflügel je ein Anschlag vorgesehen, durch den der jeweilige Rotorflügel bei seiner Anlage am zugeordneten Anschlag ungefähr in radialer Ausrichtung festgehalten wird. Dadurch wird er reicht, daß nur die in der jeweiligen Drehphase des Vertikalachsenrotors zum Antrieb wirksamen Rotorflügel entgegen dem Druck einer antreibenden Strömung festgelegt sind, während die gerade nicht am Antrieb teilnehmenden und nur vom Luftwiderstand beaufschlagten Rotorflügel sich freischwingend in eine Stellung geringsten Strömungswiderstandes einpendeln.

· Auch hierfür gilt, daß dieser Vertikalachsenrotor höchstens die der gerade vorliegenden Windgeschwindigkeit entsprechende Drehgeschwindigkeit erhalten kann.

Aus der FR-PS 699 682 ist ein Schaufelrad mit sechs Radschaufeln bekannt, von denen jede um eine senkrechte Schwenkachse begrenzt schwenkbeweglich gelagert ist. Die Radschaufeln sind in ihrem Schwerpunkt oder zumindest ist der Nähe ihres Schwerpunktes auf den Schwenkachsen gelagert. Des weiteren sind sechs feste Stäbe vorgesehen, von denen jeweils ein senkrecht stehender fester Stab einer Radschaufel zugeordnet ist. Außerdem ist je Radschaufel ein innerer und ein äußerer Anschlag vorgesehen, die die jeweiligen Endlagen der Radschaufeln bilden. Auf einer Achse des Schaufelrades ist ein Steuerkörper vorgesehen, durch den der in das Schaufelrad strömende Wind geteilt wird.

Beim Einströmen des Windes in das Schaufelrad wird der Wind durch den Steuerkörper in zwei Ströme geteilt. Der in den Antriebsbereich des Windrades einfallende Strom ist gegen die konkaven Flächen der hier befindlichen Radschaufeln gerichtet, wobei die Radschaufeln mit ihren Austrittskanten gegen die inneren Anschläge anliegen. Der Druck des Windes gegen die Radschaufeln verursacht, daß das Schaufelrad sich in Richtung der Richtung des Windes mit einer bestimmten Drehzahl dreht. Diese Drehzahl ist von der Windgeschwindigkeit abhängig. Die Umfangsgeschwindigkeit des Schaufelrades entspricht höchstens der Windgeschwindigkeit, da der Wind gegen die konkaven Flächen der Radschaufeln wirkt.

Im Rücklaufbereich des Windrades schwingen die Radschaufeln frei und verlassen mit ihren Austrittskanten den inneren Anschlag, um zum äußeren Anschlag hin zu schwenken. In dieser Lage bewegen sich die Radschaufeln entgegen der Richtung des einfallenden Windes. Hier nehmen die Radschaufeln die Stellung des geringsten Widerstandes ein und befinden sich mit ihren Austrittskanten in einer Zwischenstellung zwischen den inneren und den äußern Anschlägen.

Der Erfindung liegt die Aufgabe zugrunde, ein Windrad der einleitend genannten Art dahingehend zu verbessern, daß es besonders günstig im Wind liegt und einen besonders hohen Wirkungsgrad hat und von der gerade vorliegenden Windgeschwindigkeit weitgehend unabhängig ist.

Diese Aufgabe wird erfindungsgemäß dadurch gelöst, daß daß die Flügel als Tragflügel ausgebildet und als solche anströmbar sind und daß die Tragflügel mit ihren Nasen vorn vor dem Schwerpunkt eines jeden Tragflügels auf den Schwenkachsen schwenkbeweglich gelagert sind.

Auf diese Weise gelangt man zu einem trommelförmigen Windrad der vorstehend genannten Art, das sich in Richtung der Nasen der Tragflächen dreht. Das bedeutet gleichzeitig, daß die Tragflächen sich nur innerhalb des Bereiches zwischen dem Rand der Endscheiben und dem Zylinderrohr, jedoch nicht aus der zylindrischen Kontur des Windrades heraus nach außen bewegen können. Aus diesem Grunde kann die Drehgeschwindigkeit des Windrades größer als die Windgeschwindigkeit sein. Dadurch liegt das Windrad besonders günstig im Wind und hat einen besonders hohen Wirkungsgrad.

In weiterer Ausgestaltung der Erfindung kann der lichte Abstand zwischen der Nase eines Tragflügels und dem Schwanz des benachbarten Tragflügels etwa gleich dem lichten Abstand zwischen der Nase des Tragflügels und dem Zylinderrohr sein. - Hierdurch ist sichergestellt, daß der von der Seite her gegen das Windrad strömende Wind ohne weiteres in das Windrad eintreten und durch dieses hindurchströmen kann. Dadurch werden dem Windrad an der Einströmstelle des Windes eine Druckkraft und gleichzeitig an der gegenüberliegenden Austrittsstelle des Windes auf dem Windrad eine Zugkraft in Drehrichtung des Windrades erteilt.

Zweckmäßig können auf den Außenflächen der Tragflügel Mulden gleichförmig verteilt angeordnet sein. - Die Mulden bzw. Vertiefungen können hierbei in einem bestimmten regelmäßigen oder aber auch unregelmäßigen Muster auf der Oberfläche der Tragflügel angebracht sein. Das führt dazu, daß der Wind sich an dieser durch Mulden bzw. Vertiefungen unebenen bzw. rauhen Fläche des Tragflügels verfängt und hier Wirbel bildet. Der Wind gleitet somit nicht von der Fläche des Tragflügels ab. Dadurch ist ein besonders gutes Anlaufverhalten des Windrades gewährleistet.

Auf den Schwenkachsen kann je ein Vorflügel fest angeordnet sein. - Dadurch entsteht zwischen dem Vorflügel und dem eingeschwenkten Tragflügel ein Raum, in dem durch den heranströmenden Wind ein Staudruck entsteht. Die Vorflügel sind glatt, damit der Wind hier möglichst gut abgleiten kann.

Nach einem weiteren vorteilhaften Merkmal der Erfindung kann die Anordnung so getroffen sein, daß der Tragflügel und der Vorflügel im Bereich der Schwenkachse nach Art eines Scharniergelenkes ineinander greifen. - Hierdurch ist gewährleistet, daß der Vorflügel auf der Achse feststeht, auf der der Tragflügel hin- und herschwenken kann.

Des weiteren können an den Rändern der beiden Endplatten im Bereich der Schwänze der Tragflügel Anschläge vorgesehen sein. - Hierdurch ist sichergestellt, daß die Tragflügel nicht über die zylindrische Kontur des Windrades hinaus nach außen schwenken.

Zweckmäßig ist das Zylinderrohr auf einer in der Achse des Zylinderrohres angeordneten Drehachse drehbeweglich gelagert.

Hierbei kann die Anordnung so getroffen sein, daß innerhalb des Zylinderrohres ein Generator derart gelagert ist, daß der Stator des Generators an dem Zylinderrohr und der Rotor auf der feststehenden Drehachse angeordnet ist.

Es ist auch möglich, innerhalb des Zylinderrohres eine Pumpe anzuordnen.

Das vorstehend beschriebene Windrad kann in horizontaler Lage und in vertikaler Lage verwendet werden.

Die Erfindung wird nachfolgend anhand zweier in der Zeichnung dargestellten Ausführungsbeispielen des näheren erläutert. Es zeigt

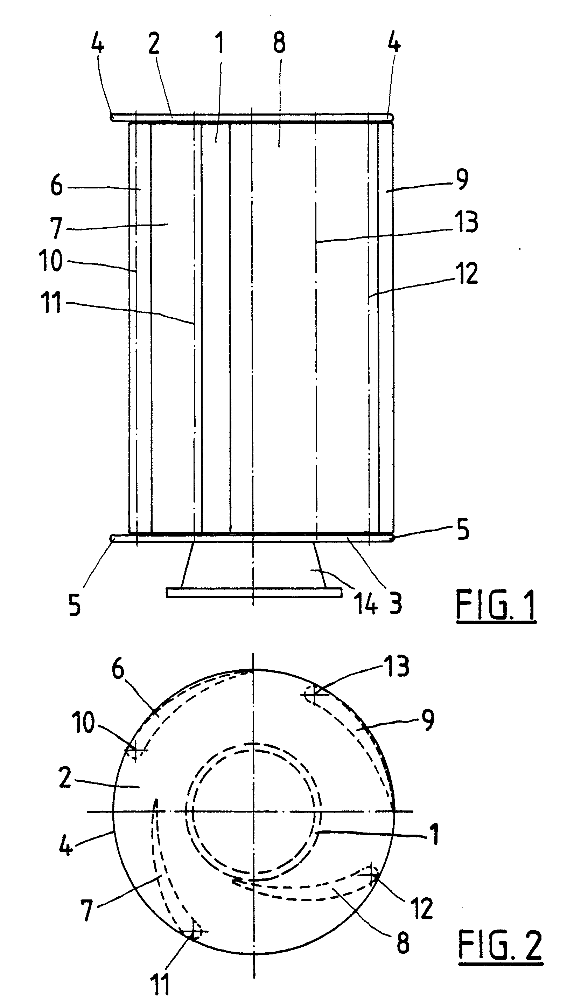

Fig. 1     eine Seitenansicht auf ein erfindungsgemäß ausgebildetes Windrad,

Fig. 2     eine Draufsicht auf Figur 1,

Fig. 3     einen vergrößerten Querschnitt durch das Windrad gemäß Figur 1,

Fig. 4     eine Einzelheit gemäß einer zweiten Ausführungsform der Erfindung und

Fig. 5     die Einzelheit gemäß Figur 4 mit weggeschwenktem Tragflügel.

Das in der Zeichnung dargestellte trommelförmige Windrad hat ein Zylinderrohr 1 und eine obere Endscheibe 2 sowie eine untere Endscheibe 3, die an den beiden Enden des Zylinderrohres 1 befestigt sind. In der Nähe der Ränder 4 und 5 der Endscheiben 2 und 3 sind Tragflügel 6,7,8,9 angeordnet, die auf Schwenkachsen 10,11,12,13 schwenkbeweglich gelagert sind.

Das Windrad ist auf einem Fuß 14 drehbeweglich angeordnet.

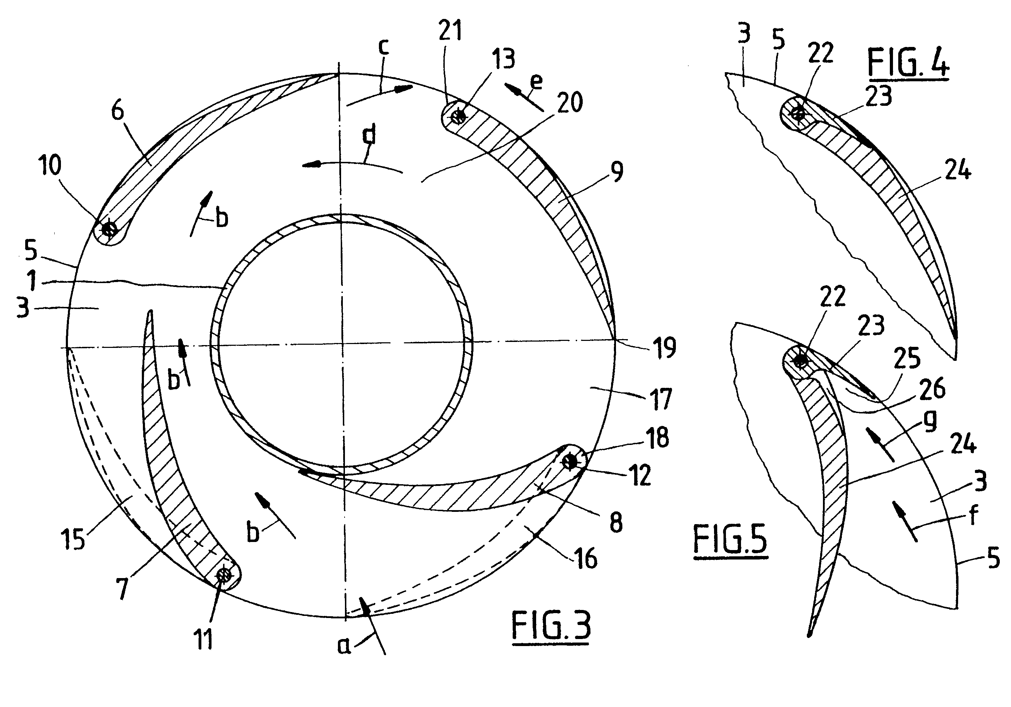

Die Tragflügel 6,7,8,9 sind in einem Bereich zwischen dem Außenrand 4,5 und dem Zylinderrohr 1 auf den Schwenkachsen 10,11,12,13 schwenkbeweglich gelagert. Dabei nehmen, wie insbesondere auf Figur 3 ersichtlich ist, die Tragflügel 6,9 die äußerst mögliche Lage ein, während der Tragflügel 8 sich in einer am weitesten nach innen geschwenkten Position befindet und der Tragflügel 7 eine mittler Lage zwischen dem Rand 4,5 der Endscheiben 2,3 und dem Zylinderrohr 1 einnimmt. In Figur 3 sind die Tragflügel 7 und gestrichelt in der am weitesten außen möglichen Stellung dargestellt und mit den Bezugszeichen 15 und 16 belegt.

Der lichte Abstand 17 zwischen der Nase 18 des Tragflügels 8 und dem Schwanz 19 des benachbarten Tragflügels 9 ist etwa gleich dem lichten Abstand 20 zwischen der Nase 21 des Tragflügels 9 und dem Zylinderrohr 1.

Gemäß einem in den Figuren 4 und 5 dargestellten zweiten Ausführungsbeispiel der Erfindung ist auf einer der Schwenkachse 13 gemäß Figur 3 vergleichbaren Schwenkachse 22 ein Vorflügel 23 fest angebracht. Der Vorflügel 23 ist nicht drehbar und behält somit seine in den Figuren 4 und 5 dargestellte Lage in jeder Stellung des Windrades bei. Außerdem ist auf der Schwenkachse 22 ein dem Tragflügel 9 gemäß Figur 3 vergleichbarer Tragflügel 24 angeordnet, der auf der Schwenkachse 22 im Bereich zwischen dem Außenrand der Endscheiben 2,3 und dem Zylinderrohr 1 schwenkbeweglich angeordnet ist.

Der Tragflügel 24 und der Vorflügel 23 greifen im Bereich des Schwenkgelenkes 22 nach Art eines Scharniergelenkes ineinander.

Durch Hereinschwenken des Tragflügels 24, wie es in Figur 5 dargestellt ist, entsteht ein dreieckförmiger Raum 25 zwischen dem Vorflügel 23 und dem Tragflügel 24.

Damit die Außenfläche des Vorflügels 23 ohne Bildung einer Kante in die Außenfläche des Tragflügels 24 übergeht, ist in dem Tragflügel 24 eine sich über seine ganze Länge erstreckende Ausnehmung 26 vorgesehen, in der der Vorflügel 23 eingebettet ist, wenn der Vorflügel 23 und der Tragflügel 24 die in Figur 4 dargestellte Stellung einnehmen.

In nicht näher dargestellter Weise sind auf den Endscheiben 2,3 Anschläge vorgesehen, durch die verhindert wird, daß die Tragflügel 6,7,8,9 zuweit nach außen aus der zylindrischen Kontur des Windrades herausschwenken.

Außerdem kann innerhalb des Zylinderrohres 1 ein nicht näher veranschaulichter Generator derart gelagert sein, daß der Stator des Generators an dem Zylinderrohr 1 und der Rotor auf der feststehenden Drehachse angeordnet ist.

Wenn der Wind in Richtung des Pfeiles a in das Windrad einfällt, durchströmt er das Windrad in Richtung der Pfeile b und verläßt es in Richtung des Pfeiles c. Dabei wird der Tragflügel 8 gegen das Zylinderrohr 1 geschwenkt und gleichzeitig auf den Tragflügel 8 eine in Drehrichtung d wirkende Kraft ausgeübt. In dieser Betriebsstellung nimmt der Tragflügel 7 eine in Figur 3 dargestellte mittlere Stellung ein.

Der zwischen den Tragflügeln 6 und 9 in Richtung des Pfeiles c aus dem Windrad ausströmende Wind verursacht außerhalb des Windrades im Bereich der Nase 13 einen Wirbel, dadurch den auf den Tragflügel 9 eine Kraft in Richtung des Pfeiles e und somit in Drehrichtung d ausgeübt wird.

Wenn bei der in Figur 4 und Figur 5 dargestellten Ausführungsform Wind in Richtung des Pfeiles f weht, so entsteht zusätzlich zu den vorstehend beschriebenen Kräften in Drehrichtung des Windrades eine weitere Kraft in Richtung des Pfeiles g, die daher rührt, daß der Wind sich in dem dreieckförmigen Raum 25 zwischen dem Vorflügel 23 und dem Tragflügel 24 verfängt und hier einen Druck in Richtung des Pfeiles g ausübt.

**Ansprüche**

1. Trommelförmiges Windrad mit einem koaxial zur Drehache des Windrades angeordneten Zylinderrohr mit je einer kreisförmigen Endscheibe an beiden Enden des Zylinderrohres, wobei auf dem Umfang des Windrades in gleichem Umfangsabstand wenigstens vier Flügel mit einem gekrümmt stromlinienförmigen Profil vorgesehen sind, die in Randnähe der beiden Endscheiben auf parallel zur Drehachse des Windrades angeordneten Schwenkachsen begrenzt schwenkbeweglich gelagert sind, **dadurch gekennzeichnet,** daß die Flügel als Tragflügel (6,7,8,9) ausgebildet und als solche anströmbar sind und daß die Tragflügel (6,7,8,9) mit ihren Nasen (18,21) vorn vor dem Schwerpunkt eines jeden Tragflügels (6,7,8,9) auf den Schwenkachsen (10, 11 ,12, 13) schwenkbeweglich gelagert sind.

2. Windrad nach Anspruch 1, dadurch gekennzeichnet, daß der lichte Abstand (17) zwischen der Nase (18) eines Tragflügels (8) und dem Schwanz (19) des benachbarten Tragflügels (9) etwa gleich dem lichten Abstand (20) zwischen der Nase (21) des Tragflügels (9) und dem Zylinderrohr (1) ist.

3. Windrad nach Anspruch 1 oder 2, dadurch gekennzeichnet, daß auf den Außenflächen der Tragflügel (6,7,8,9) Mulden gleichförmig verteilt angeordnet sind.

4. Windrad nach einem der vorhergehenden Ansprüche, dadurch gekennzeichnet, daß auf den Schwenkachsen (22) je eine Profilleiste (23) fest angeordnet ist.

5. Windrad nach Anspruch 4, dadurch gekennzeichnet, daß die Oberflächen der Profilleiste (23) glatt sind.

6. Windrad nach einem der vorhergehenden Ansprüche, dadurch gekennzeichnet, daß der Tragflügel (24) und die Profilleiste (23) im Bereich der Schwenkachse (22) nach Art eines Scharniergelenkes ineinander greifen.

7. Windrad nach einem der vorhergehenden Ansprüche, dadurch gekennzeichnet, daß an den Rändern (4,5) der beiden Endplatten (2,3) im Bereich der Schwänze (19) der Tragflügel (6,7,8,9) Anschläge vorgesehen sind.

8. Windrad nach einem der vorhergehenden Ansprüche, dadurch gekennzeichnet, daß das Zylinderrohr (1) auf einer in der Achse des Zylinderrohres (1) angeordneten Drehachse drehbeweglich gelagert ist.

9. Windrad nach einem der vorhergehenden Ansprüche, dadurch gekennzeichnet, daß innerhalb des Zylinderrohres (1) ein Generator derart gelagert ist, daß der Stator des Generators an dem Zylinderrohr (1) und der Rotor auf der feststehenden Drehachse angeordnet ist.

10. Windrad nach einem der vorhergehenden Ansprüche, dadurch gekennzeichnet, daß innerhalb des Zylinderrohres (1) eine Pumpe angeordnet ist.

## Claims

1. A drum-like wind wheel comprising a cylinder tube which is arranged coaxially relative to the axis of rotation of the wind wheel, with a respective circular end plate at each of the two ends of the cylinder tube, wherein provided on the periphery of the wind wheel at equal peripheral spacings are at least four vanes of a curvedly streamlined profile, which are mounted for limited pivotal movement in the proximity of the edges of the two end plates on pivot axes which are disposed parallel to the axis of rotation of the wind wheel, characterised in that the vanes are in the form of aerofoils (6, 7, 8, 9) and as such can have a flow thereover and that the aerofoils (6, 7, 8, 9) are mounted pivotably on the pivot axes (10, 11, 12, 13) with the aerofoil noses (18, 21) forwardly of the centre of gravity of each aerofoil (6, 7, 8, 9).

2. A wind wheel according to claim 1 characterised in that the internal spacing (17) between the nose (18) of an aerofoil (8) and the tail (19) of the adjacent aerofoil (9) is approximately equal to the internal spacing (20) between the nose (21) of the aerofoil (9) and the cylinder tube (1).

3. A wind wheel according to claim 1 or claim 2 characterised in that hollows are arranged in uniformly distributed fashion on the outside surfaces of the aerofoils (6, 7, 8, 9).

4. A wind wheel according to one of the preceding claims characterised in that a respective profile strip (23) is fixedly arranged on each of the pivot axes (22).

5. A wind wheel according to claim 4 characterised in that the surfaces of the profile strip (23) are smooth.

6. A wind wheel according to one of the preceding claims characterised in that the aerofoil (24) and the profile strip (23) engage into each other in the manner of a hinge joint in the region of the pivot axis (22).

7. A wind wheel according to one of the preceding claims characterised in that stops are provided at the edges (4, 5) of the two end plates (2, 3) in the region of the tails (19) of the aerofoils (6, 7, 8, 9).

8. A wind wheel according to one of the preceding claims characterised in that the cylinder tube (1) is rotatably mounted on a rotational shaft arranged on the axis of the cylinder tube (1).

9. A wind wheel according to one of the preceding claims characterised in that a generator is mounted within the cylinder tube (1) in such a way that the stator of the generator is arranged on the cylinder tube (1) and the rotor is arranged on the stationary rotational shaft.

10. A wind wheel according to one of the preceding claims characterised in that a pump is arranged within the cylinder tube (1).

## Revendications

1. Roue éolienne en tambour avec un tube cylindrique disposé coaxialement à l'axe de rotation de la roue éolienne, avec un disque terminal à chacune des deux extrémités du tube cylindrique, avec au moins quatre ailes présentant un profil aérodynamique courbé et disposées au pourtour de la roue éolienne et à distance égale sur ce périmètre, lesquelles sont fixées avec articulation de pivotement limité près du bord des deux disques terminaux sur des axes de pivotement disposés parallèlement à l'axe de rotation de la roue éolienne, caractérisée en ce que les ailes sont construites comme ailes portantes (6,7,8,9) et, de ce fait, sont affluables, et en ce que les ailes portantes (6,7,8,9) ont leurs talons basculables (18,21) fixés à l'avant du centre de gravité de l'aile portante (6,7,8,9) correspondante et sur l'axe de pivotement (10,11,12,13).

2. Roue éolienne selon la revendication 1, caractérisée en ce que la distance intérieure (17) entre le talon (18) et la queue (19) de l'aile portante (9) voisine est à peu près identique à la distance intérieure (20) entre le talon (21) de l'aile portante (9) et le tube cylindrique (1).

3. Roue éolienne selon les revendications 1 ou 2, caractérisée en ce que des creux de même forme sont disposés sur les surfaces extérieures des ailes portantes (6,7,8,9).

4. Roue éolienne selon l'une quelconque des revendications précédentes, caractérisée en ce qu'une latte profilée (23) fixe est disposée sur chaque axe de pivotement (22).

5. Roue éolienne selon revendication 4, caractérisée en ce que les surfaces des lattes profilées (23) sont plates.

6. Roue éolienne selon l'une quelconque des revendications précédentes, caractérisée en ce que l'aile portante (24) et la latte profilée (23) s'intègrent l'une dans l'autre au niveau de l'axe de pivotement (22) en articulation de charnière.

7. Roue éolienne selon l'une quelconque des revendications précédentes, caractérisée en ce que des butées sont prévues aux bords (4,5) des deux plaques terminales (2,3) au niveau de la queue (19) des ailes portantes (6,7,8,9).

8. Roue éolienne selon l'une quelconque des revendications précédentes, caractérisée en ce que le tube cylindrique (1) est articulé de façon rotative sur un axe de rotation disposé dans l'axe du tube cylindrique (1).

9. Roue éolienne selon l'une quelconque des revendications précédentes, caractérisée en ce qu'un générateur est fixé à l'intérieur du tube cylindrique (1) de façon telle que le stator du générateur est disposé au tube cylindrique (1) et le rotor à l'axe de rotation fixe.

10. Roue éolienne selon l'une quelconque des revendications précédentes, caractérisée en ce qu'une pompe est disposée à l'intérieur du tube cylindrique.

FIG. 1

FIG. 2

**FIG.4**

**FIG.5**

**FIG.3**